# EUROPEAN PATENT APPLICATION

(11) **EP 1 726 984 A1**
(43) Date of publication of application: **29.11.2006**
(21) Application number: 06252721.3
(22) Date of filing: 25.05.2006
(51) Int. Cl.: G02B 27/46

(54) **Multi-matrix depth of field image sensor**

(30) Priority: 25.05.2005 US 684895 P
(71) Applicant: OmniVision Technologies, Inc., Sunnyvale, California 94089 (US)
(72) Inventor: Lee, Jess Jan Young, Menlo Park, California 94025 (US)
(74) Representative: Webster, Jeremy Mark

(57) **Abstract**

A technique for imaging involves wavefront coded optics (112) and multiple filters. In a non-limiting embodiment, a system developed according to the technique includes wavefront coded optics and a multi-filter image processor (124). In alternative embodiments, imaging optics may come before wavefront coded optics or vice versa. In another non-limiting embodiment, a method according to the technique includes selecting a focus distance, wavefront encoding light reflected from or emitted by an object, converting the light to a spatially blurred image, and processing the spatially blurred image using a filter associated with the selected focus distance.

## Description

Exemplary embodiments of the invention relate to optics. Specific embodiments relate to wavefront coding systems.

Optical systems for rendering or viewing an image include devices that have a characteristic that is referred to as depth of field (DOF). A camera for a typical consumer has a relatively wide DOF, which means that objects within a wide range of distances are relatively well-focused. Professional photographers often use cameras having a relatively narrow DOF, which tends to blur objects that are not at a given distance (e.g., the distance of the subject of the photograph). Microscopes, telescopes, fingerprint readers, and other optical devices will typically have a DOF that is appropriate for a given application.

Fixed focus optical systems typically have a fixed lens and a wide DOF. A wide DOF is useful in fixed focus optical systems because the focus distance does not vary. Digital cameras with a digital zoom may be cameras of this type, since a digital zoom does not necessarily require the use of a movable lens. Multi-focal length lenses, on the other hand, allow a user to adjust a lens to achieve a desired focus (e.g., optical zoom). Active auto-focus (AF) optical systems include a lens that moves back and forth to achieve focus automatically.

Active AF may be implemented using a range finder (RF) to determine distance (typically utilizing light), and moving the lens to a position that corresponds to that distance. A viewfinder is usually mounted above and to the right or left of the lens of a typical RF camera. The viewfinder exhibits a problem known as parallax when trying to frame subjects closer than five feet from the camera. In addition, active AF tends to be relatively expensive to implement.

Wavefront coding is an alternative technique used to, for example, achieve wide DOF in an optical device that may or may not have active AF functionality. In a wavefront coding optical system, a surface of a lens assembly (e.g., the surface of one lens of a lens assembly having multiple lenses) is modified to distort an image in a consistent way that is tolerant to misfocus. Alternative techniques may be used to distort the image at some time between when the light from an object is received and when the light is converted to an image at a detector, such as analog film, CMOS, CCD, or other detector. Image processing then removes the distortion from the image. So, a sharp image may be rendered even after a misfocus. This effectively results in wider DOF.

Wavefront coding is a relatively new technique that is used to reduce the effects of misfocus in sampled imaging systems through the use of wavefront coded optics that operate by applying aspheric phase variations to wavefronts of light from the object being imaged. Image processing of the resulting images removes the spatial effects of the wavefront coding. The processed images are relatively insensitive to the distance between the object and the detector. U.S. Pat. No. 5,748,371, which issued May 5, 1998, describes wavefront coding; U.S. Pat. No. 6,021,005, which issued February 1, 2000, describes anti-aliasing apparatus related to wavefront coding systems; U.S. Pat. No. 6,069,738, which issued May 30, 2000, describes use of wavefront coding in projection systems; U.S. Pat. No. 6,097,856, which issued August 1, 2000, describes the combination of wavefront coding and amplitude apodizers; and U.S. Pat. No. 6,842,297, which issued January 11, 2005, describes improved wavefront coded optics. Co-pending patent application 10/376,924, filed February 27, 2003, describes an example of a wavefront encoded optical system. These six patent/patent applications are incorporated herein by reference.

One advantage of wavefront coding optical systems is that fixed focus optical systems can be made without reducing aperture size. Systems that do not utilize wavefront coding, on the other hand, typically must reduce aperture size, which reduces the amount of light that reaches the lens, in order to achieve broad DOF. Some consumers may feel that, although the wavefront coding optical system may be superior to a non-wavefront coding optical system with a fixed focus lens, both of these techniques result in an optical system that is less flexible than a device with a multi-focal length lens.

The foregoing examples of the related art and limitations related therewith are intended to be illustrative and not exclusive. Other limitations of the related art will become apparent to those of skill in the art upon a reading of the specification and a study of the drawings.

The following embodiments and aspects thereof are described and illustrated in conjunction with systems, tools, and methods that are meant to be exemplary and illustrative, not limiting in scope. In various embodiments, one or more of the above-described problems have been reduced or eliminated, while other embodiments are directed to other improvements.

A technique for imaging involves wavefront coded optics and multiple filters.
In a non-limiting embodiment, a system developed according to the technique includes wavefront coded optics and a multi-filter image processor. In alternative embodiments, imaging optics may come before wavefront coded optics or vice versa. In another non-limiting embodiment, a method according to the technique includes selecting a focus distance, wavefront encoding light reflected from or emitted by an object, converting the light to a spatially blurred image, and processing the spatially blurred image using a filter associated with the selected focus distance.

In a non-limiting embodiment, a system may include a lens assembly, including at least one lens with a wavefront coding-compatible surface effective to wavefront encode light reflected from or emitted by an object that is incident on the at least one lens. The system may further include a digital signal processing (DSP) system, in optical communication with the lens assembly, including a plurality of filters associated with a respective plurality of focus ranges for use with a wavefront coding algorithm, wherein the DSP system is effective to convert the wavefront encoded light into a final image at one of the plurality of focus ranges using an associated one of the filters.

In a non-limiting embodiment, a system includes optical zoom control, wavefront coding zoom control, and digital zoom control. By way of example but not limitation, the system may include wavefront coded optics effective to convert light from an object into wavefront encoded light. The system may further include an optical zoom control, coupled to the wavefront coded optics, effective to adjust the focal length of the wavefront coded optics. The system may further include imaging optics, in optical communication with the wavefront coded optics, effective to convert the wavefront coded light into a spatially blurred image. The system may further include a multi-filter image processor, coupled to the imaging optics, effective to convert the spatially blurred image into a final image. The system may further include a wavefront coding zoom control, coupled to the multi-filter image processor, effective to adjust the apparent focal length of the imaging optics. The system may further include a digital zoom control, coupled to the multi-filter image processor, effective to blow up an area of the final image.

In a non-limiting embodiment, a system may include imaging optics effective to convert light from an object into an image. The system may further include wavefront coded optics, coupled to the imaging optics, effective to convert the image into a spatially blurred image. The system may further include a multi-filter image processor, coupled to the wavefront coded optics, effective to convert the spatially blurred image into a final image using a plurality of filters.

In a non-limiting embodiment, a system may include wavefront coded optics effective to convert light from an object into wavefront encoded light. The system may further include imaging optics, in optical communication with the wavefront coded optics, effective to convert the wavefront encoded light into a spatially blurred image. The system may further include a multi-filter image processor, coupled to the wavefront coded optics, effective to convert the spatially blurred image into a final image using a plurality of filters.

In a non-limiting embodiment, a system may include a decoder effective to, using a plurality of filters, convert a spatially distorted image into a respective plurality of processed images. The system may further include a passive auto-focus (AF) engine, coupled to the wavefront coded optics, effective to select one of the plurality of processed images as a final image, wherein, of the plurality of processed images, the final image is approximately the most focused in a predetermined area of the processed images.

In a non-limiting embodiment, a method includes receiving a spatially distorted image, decoding the spatially distorted image into a plurality of processed images using a respective plurality of filter parameters, and selecting one of the processed images as a final image. A system implementing the method may include a passive auto-focus (AF) engine effective to select a processed image as the final image.

In a non-limiting embodiment, a method may include receiving a focus range selection, wavefront encoding light reflected from or emitted by an object, converting the light to a spatially blurred image, and processing the spatially blurred image using a filter associated with the selected focus range.

In a non-limiting embodiment, a method may include receiving a spatially distorted image, decoding the spatially distorted image into a plurality of processed images using a respective plurality of filter parameters, and selecting one of the processed images as a final image.

### BRIEF DESCRIPTION OF THE DRAWINGS

Embodiments of the invention are illustrated in the figures. However, the embodiments and figures are illustrative rather than limiting; they provide examples of the invention.

FIG. 1 depicts an optical system according to an embodiment.

FIG. 2 depicts a flowchart of a method for imaging an object according to an embodiment.

FIGS. 3 and 4 depict optical systems according to alternative embodiment.

FIG. 5 depicts an image processing system according to an embodiment.

FIGS. 6A and 6B depict images for use in the system of FIG. 5.

FIG. 7 depicts a flowchart of a method for passive auto-focus (AF) according to an embodiment.

FIG. 8 depicts a computer system according to an embodiment.

FIG. 9 depicts a system with multi-zoom capability according to an embodiment.

FIG. 10 depicts a wavefront coded image processing system according to an embodiment.

In the figures, similar reference numerals may denote similar components.

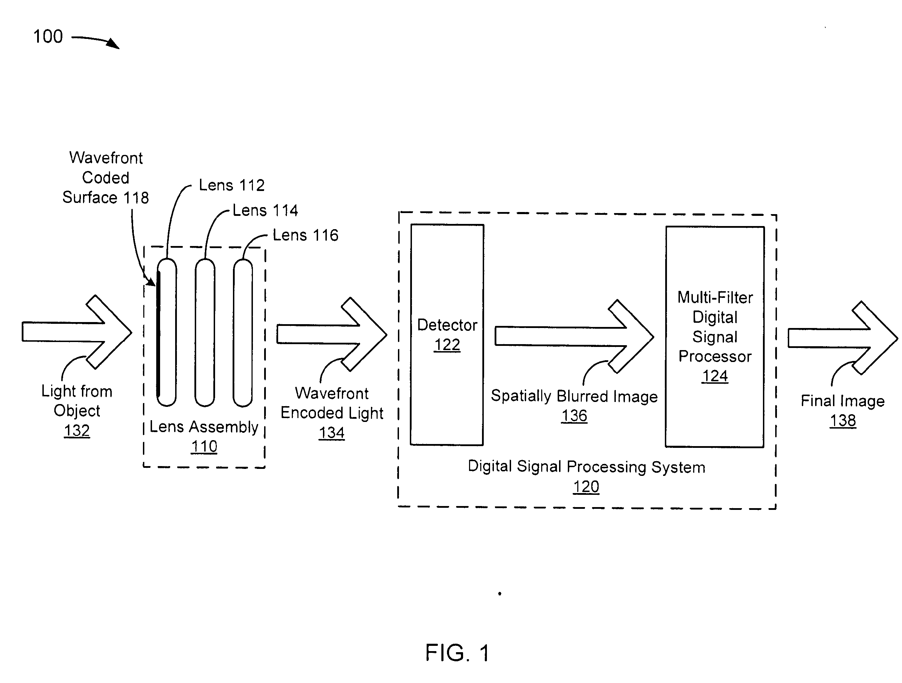

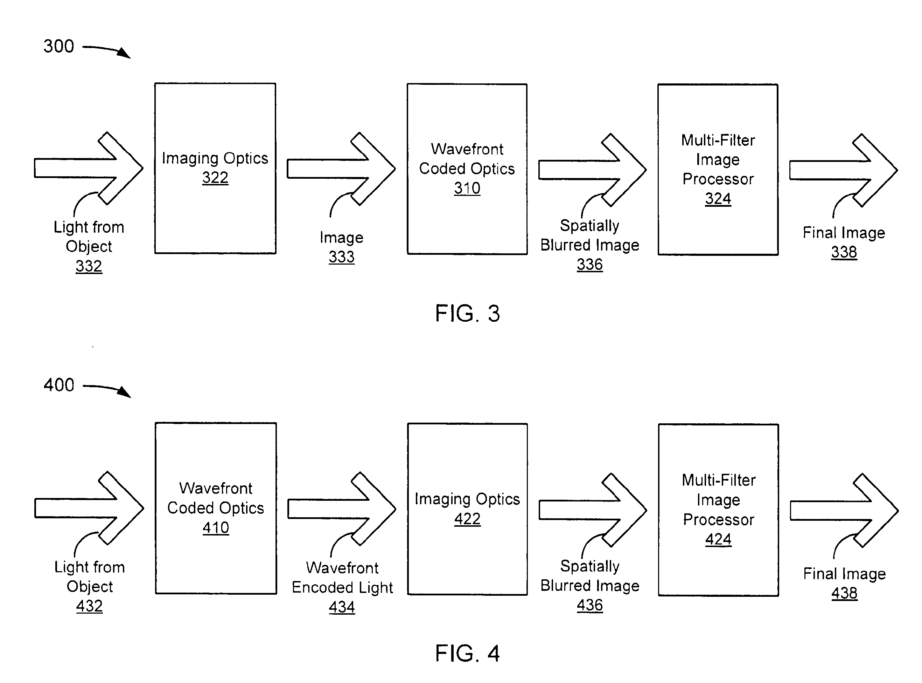

FIG. 1 depicts an optical system 100 according to an embodiment. It may be noted that the depiction of the system 100 in the example of FIG. 1 is for illustrative purposes only. The depicted dimensions of various components are not intended to be to scale or to accurately reflect the shape of the various components. The same is true for FIGS. 3-6B, 8, and 9.

In the example of FIG. 1, the system 100 includes a lens assembly 110 and a digital signal processing system 120. The lens assembly 110 includes a first lens 112, a second lens 114. and a third lens 116. It may be noted that in alternative embodiments, the lens assembly 110 may include a single lens 112, or more than three lenses. The first lens 112 is configured to include a wavefront coded surface 118. The wavefront coded surface 118 may include one of an infinite number of surfaces that are wavefront coding-compatible. One example of a wavefront coding-compatible surface is a cubic mask. A cubic mask typically has only one parameter (its height), so a cubic mask may or may not be suitable from some optimized designs in practical systems.

Wavefront coding-compatible, as used herein, refers to a characteristic by which a device, such as the wavefront coded surface 118, applies aspheric phase variations to wavefronts of light from an object being imaged to distort the light. Subsequent signal processing removes the spatial effects of the wavefront coding to yield an image that is relatively insensitive to the distance between the object and the detector. ln addition, as is known to those of skill in the art of wavefront coding, wavefront coding can be used to, by way of example but not limitation, control general focus-related aberrations, provide anti-aliasing, etc. It may be noted that the wavefront coded surface 118 may be replaced by any device that is wavefront coding-compatible.

It may be noted that the wavefront coded surface 118 is depicted in the example of FIG. I on the surface of the first lens 112, but could alternatively be located on the second lens 114 or the third lens 116, or on the backs of the lenses instead of the front or within the lenses at some point between the front surface and back surface of the lens. Moreover, a wavefront coding-compatible device could be located outside of the lens assembly, either in front of the lens assembly 110 or behind the lens assembly 110, or at some location within the digital signal processing system 120.

In the example of FIG. 1, the digital signal processing system 120 includes a detector 122 and a multi-filter signal processor 124. In a non-limiting embodiment, the detector 122 is effective to convert light into an image, such as a red-green-blue (RGB) image. The detector may include analog film, complementary metal oxide semiconductor (CMOS), charged coupled device (CCD), or some other device effective to convert a signal into an image. The multi-filter digital signal processor (DSP) 124 uses a wavefront coding-compatible algorithm to remove spatial effects of wavefront coding from the image rendered by the detector 122. Advantageously, the wavefront coding-compatible algorithm is capable of utilizing a plurality of filters that are associated with a respective plurality of focus distances, depth of field (DOF), noise correction, color enhancements, etc. For example, by using a first filter associated with a first focus distance, the multi-filter DSP 124 is effective to render a final image that appears to have been imaged at the first focus distance.

The final image of the digital signal processing system 120 may be in any of a variety of formats. A subset of known formats include: bmp, jpg, gif, png, tif, jpeg, rle, dib, pcd, avi, icb, ico, wmf, tiff, tga, pcx, scr, emf, jif, vda, jfif, rgb, afi, vst, win, cel, jpe, rgba, pic, pcc, cut, ppm, pgm, pbm, sgi, rla, rpf, psd, pdd, psp, cur, targa, bw, tar, jfi, eps (preview), int, inta, fax, jng, mng, 411, wbmp, wbm, ani, pix, thm, g3f, g3n, jp2, j2k, jpc, jpx, j2c, j, r14, r18, sys, tim, g3, tpi, tpic, pnm, pxm, iri, iris, rppm, rpgm, rpbm, rpxm, rpnm, rpp, rpg, rpb, rpx, rpn, bpx, and wap. A person with skill in the art of imaging would almost certainly be able to develop other formats or find additional existing formats. The specific format of the final image is not critical.

By way of example but not limitation, the multi-filter DSP 124 may include three filters associated with different focus distances and DOF. A first filter may have, for example, a "near" focus distance and a DOF that is associated with a 5~30 cm focus range. A second filter may have a "medium" focus distance and a DOF that is associated with a 30~80 cm focus range. A third filter may have a "far" focus distance and DOF that is associated with 80+ cm focus range. Thus, if the third filter is used, an object at 50 cm will probably be blurred in the final image. Since the filters are parameters that are fed into the wavefront coding algorithm, implementing additional filters is relatively inexpensive (and, of course, a non-limiting embodiment may include two filters, instead of three). Moreover, since the algorithm may reside in software or firmware, additional hardware is not required to incorporate additional filters. Indeed, changing the focus distance and DOF in this way is possible without actually moving a lens or changing the aperture, but the result is a close approximation to a typical multi-focal length optical system.

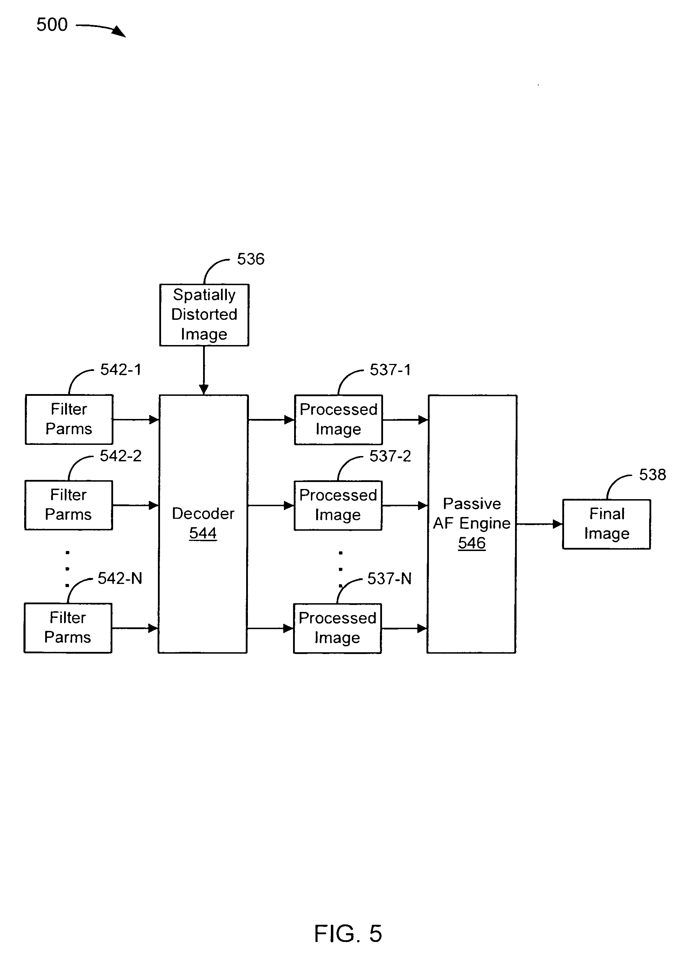

In operation, light 132 from an object (not shown) is incident upon the wavefront coded surface 118 8 of the lens 112. The light 132 may be reflected off of or emitted by the object. The light is wavefront encoded by the wavefront coded surface 118 and passes through the lens assembly 110 to the digital signal processing system 120. The detector 122 of the digital signal processing system 120 converts the wavefront encoded light 134 into a spatially blurred image 136. The multi-filter DSP 124 processes the spatially blurred image 136 into a final image 138 using a filter associated with a selected focus distance and DOF. The filter may be selected manually by a user or by way of auto-focus (AF) as described later with reference to FIG. 5.

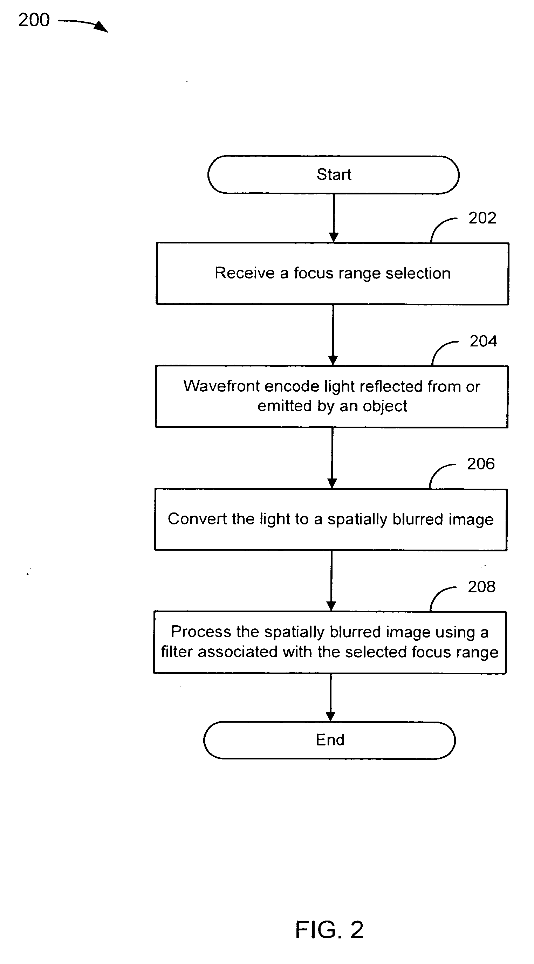

FIG. 2 depicts a flowchart 200 of a method for imaging an object according to an embodiment. This method and other methods are depicted as serially arranged modules. However, modules of the methods may be reordered, or arranged for parallel execution as appropriate.

In the example of FIG. 2, the flowchart 200 starts at module 202 where a focus range selection is received at an imaging system. The focus range selection may be made by a user of the imaging system. Alternatively, the focus range selection may be made by an AF means. It is to be understood that a focus range selection may have DOF and/or focal length parameters. Moreover, in an alternative, the focus range selection may be replaced with or augmented with additional parameters, such as noise correction, color enhancement, etc.

In the example of FIG. 2, the flowchart 200 continues at module 204 where light reflected from or emitted by an object is wavefront encoded. Wavefront encoding is accomplished using wavefront coded optics, such as a wavefront coding-compatible device, which may include, by way of example but not limitation, a cubic mask. The output of the wavefront coding-compatible device may be distorted light.

In the example of FIG. 2, the flowchart 200 continues at module 206 where light is converted to a spatially blurred image. The conversion is accomplished by imaging optics such as, by way of example but not limitation, a detector. It may be noted that in an embodiment wherein the module 206 occurs before the module 204, the input to the imaging optics is light and the output is an image; and the input to the wavefront coding-compatible device is the image and the output of the wavefront coding-compatible device is a spatially blurred image.

In the example of FIG. 2, the flowchart 200 continues at module 208 where the spatially blurred image is processed using a filter associated with the selected focus range. The processing is accomplished by a signal processor, such as a DSP. The spatially blurred image is rendered to remove the distortion introduced by the wavefront coded optics. The filters have associated focus ranges that are applied to produce a final image that appears to have the associated focus range. The DOF associated with the unprocessed image may be broad, but the signal processor effectively segments the DOF into multiple bands, each band being associated with a filter. In this way, DOF can be introduced later in the process than an optical device that relies upon imaging optics to set the DOF and focal length.

FIGS. 3 and 4 depict optical systems 300 and 400, respectively, according to alternative embodiments. In non-limiting embodiments, the optical systems 300, 400 are effective to implement an aspect of the method of FIG. 2.

In the example of FIG. 3, the system 300 includes imaging optics 322, wavefront coded optics 310, and a multi-filter image processor 324. The imaging optics 322 may include, by way of example but not limitation, a detector effective to convert light waves to an image, such as an RGB image. The wavefront coded optics 310 may include, by way of example but not limitation, a wavefront coding-compatible device effective to convert an image into a spatially distorted image. The multi-filter image processor 324 may include, by way of example but not limitation, a DSP effective to process a spatially distorted image into a final image.

The imaging optics 322 may convert light into an analog image or a digital image. If the imaging optics 322 convert the light into an analog image, then the system 300 may include an analog-to-digital converter (ADC). Alternatively, the multi-filter image processor 324 may include an ADC to convert an analog image into a digital image; or the final image may be analog.

In operation, light 332 from an object is incident on the imaging optics 322. The imaging optics convert the light 332 into an image 333. The wavefront coded optics 310 convert the image 333 into a spatially blurred image 336. The multi-filter image processor 324 removes the spatial distortion from the spatially blurred image 336 and renders a final image 338.

In the example of FIG. 4, the system 400 includes wavefront coded optics 410. imaging optics 422, and a multi-filter image processor 424. In operation, light 432 from an object is incident on the wavefront coded optics 410. The wavefront coded optics 410 convert the light 432 into wavefront encoded light 434. The imaging optics 422 convert the wavefront encoded light 434 into a spatially blurred image 436. The multi-filter image processor removes the spatial distortion from the spatially blurred image 436 and renders a final image 438.

It should be understood that other arrangements and permutations of components would become apparent to those of skill in the art of imaging with this reference before them. Such arrangements and permutations are considered to fall within the true spirit and scope of these teachings.

FIG. 5 depicts an image processing system 500 according to an embodiment. The system 500 includes filter parameters 542-1 to 542-N (collectively referred to hereinafter as "filter parameters 542"), a decoder 544, and a passive AF engine 546.

The filter parameters 542 may be stored in, by way of example but not limitation, non-volatile (NV) storage, such as ROM, in volatile storage such as DRAM, or in NV storage until needed, at which point the filter parameters 542 are loaded into RAM. It is to be understood that for descriptive purposes, the filter parameters 542 may be referred to as "stored in memory," but a person of skill in the art of computer engineering would understand that this includes a variety of storage mechanisms, the specific mechanism of which may be critical to a specific implementation of embodiments described herein, but which is not critical to an understanding of the embodiments.

The decoder 544 is effective to convert a spatially distorted image into an undistorted image. By way of example but not limitation, the decoder 544 may be capable of converting an image that has been distorted in accordance with a wavefront coding technique into an image without the distortion. The decoder 544 may be implemented as hardware, firmware, or software, as would be understood by one of skill in the art of computer engineering. In an embodiment, the decoder 544 includes a processor.

The passive AF engine 546 is effective to select a processed image as a final image. Advantageously, since the passive AF engine 546 can select between images without the necessity of moving a lens, the process is faster than for comparable active AF engines. It may be noted that the system 500 could include an optical zoom (with movable lenses), which could also utilize an active AF engine. In an embodiment, the passive AF engine 546 includes a processor. Alternatively, the decoder 544 and passive AF engine 546 may share one or more processors (not shown).

In operation, the decoder 544 receives a spatially distorted image 536 as input. In the example of FIG. 5, the decoder 544 also receives the filter parameters 542 as inputs. It may be noted that the filter parameters 542 may be part of the decoder 544 code, or distinct from it and input as parameters. In any case, in a non-limiting embodiment, the decoder 544 uses each of the filters 542 in applying a decoding algorithm to the spatially distorted image 536 to render a plurality of processed images 537-1 to 537-N (referred to hereinafter collectively as the "processed images 537"), respectively associated with the filter parameters 542. The decoding algorithm may be, by way of example but not limitation, a wavefront encoding algorithm. The passive AF engine 546 then selects one of the processed images 537 as a final image 538.

Many techniques are used in active AF systems to render an image that is in focus. The principles of these techniques may be utilized to render the final image 538. One of the simplest algorithms is rarely employed in active AF systems because of the time required to move a lens; that simple algorithm is to determine the focus of images at each discrete focal distance to which a step motor can adjust the lens. Advantageously, even this least efficient algorithm can be employed in a passive AF engine since the image processing does not require the movement of a lens.

For example, the decoder 544 may be capable of rendering the processed images 537 at approximately the same time. By approximately the same time, what is meant is that a user of the optical device may point the device at an object and the decoder 544 will render the processed images 537 sequentially so quickly that the user will not be aware that AF was used to produce the final image 538. Of course, the processed images 537 could also be rendered simultaneously using parallel processing techniques. For aesthetic or other reasons, the AF feature could be intentionally slowed to simulate lens movement, or a relatively slow processor or relatively inexpensive memory could be used to reduce the cost of manufacture. Moreover, in a device with a large number of filters, the time required to render each of the processed images 537 may increase.

In alternative embodiments, a number of algorithms could be employed to reduce the number of processed images 537 that need be rendered. It follows that the number of processed images 537 is typically less than the number of filter parameters 542 in these alternative embodiments. Such algorithms would be apparent to those of skill in the art of computer science with this reference before them.

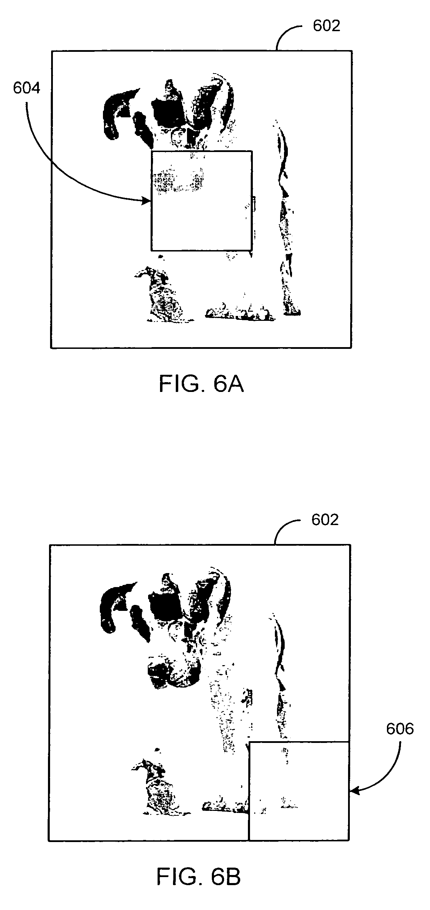

In an embodiment, the passive AF engine 546 evaluates a portion of each the processed images 537 to determine which image has the greatest sharpness at the evaluated portion. For example, FIG. 6A depicts an image 602 with a shaded portion 604. In a non-limiting embodiment, the passive AF engine 546 compares the shaded portion 604 of each of the processed images 537 to determine which of the processed images 537 has, by way of example but not limitation, the sharpest edges in the shaded portion 604. The shaded portion 604 may correspond to the center of an image, or may be selectable by a user so that the center of the image does not determine the applicable filter.

FIG. 6B depicts the image 602 with an uncentered shaded portion 606. The location of the shaded portion 604 (FIG. 6A), 606 (FIG. 6B) may be selectable by a user of the device, set automatically by a picture selector, or both. The shaded portion 604, 606 may be of practically any area and may be located in practically any portion of the image. It should be noted that the shaded portion 604, 606 is "shaded" only for the purposes of illustration.

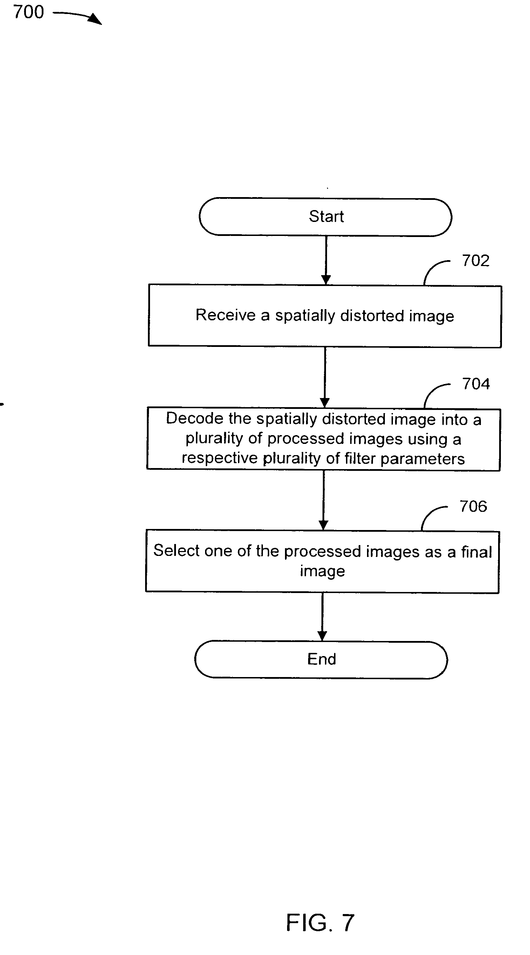

FIG. 7 depicts a flowchart 700 of a method for passive AF according to an embodiment. In the example of FIG. 7, the flowchart 700 starts at module 702 where a spatially distorted image is received. The image may be spatially distorted from using, by way of example but not limitation, a wavefront coding-compatible device.

The flowchart 700 continues at module 704 where the spatially distorted image is decoded into a plurality of processed images using a respective plurality of filter parameters. The spatially distorted image may be decoded using, by way of example but not limitation, a decoder. The decoder may include or otherwise receive a plurality of filter parameters for use in decoding the spatially distorted image. The filter parameters are unique with respect to one another and yield different processed images when utilized by, by way of example but not limitation, a wavefront coding algorithm.

The flowchart ends at module 706 where one of the processed images is selected as a final image. In a non-limiting embodiment, a passive AF engine selects the processed image that has the best focus in a sub-area of the image. In an alternative embodiment, the passive AF engine selects the processed image that has the best over-all focus. In an alternative embodiment, the passive AF engine selects the processed image using a search algorithm.

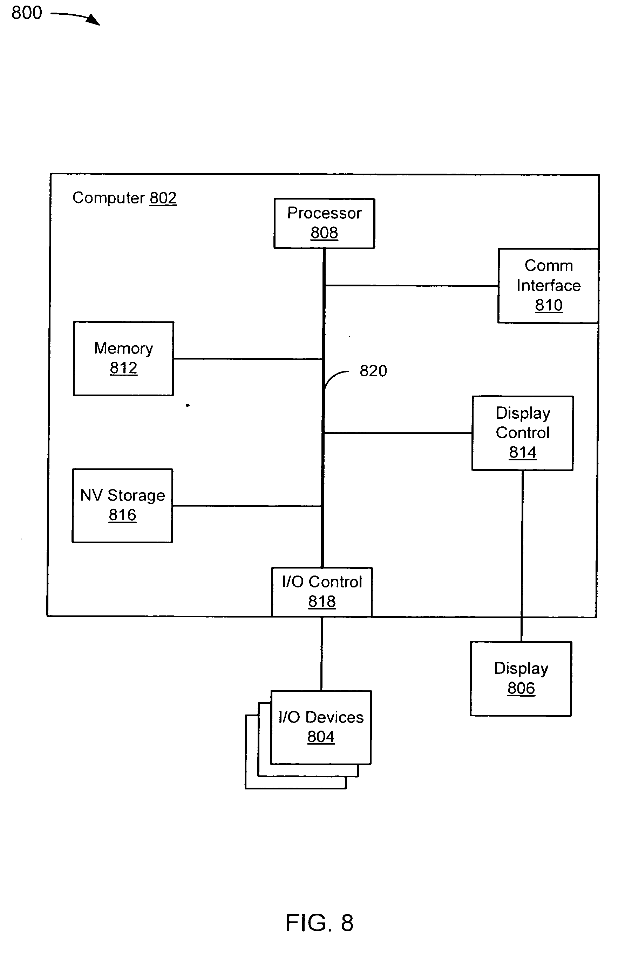

FIG. 8 depicts a computer system 800 appropriate for use with one or more of the embodiments described above. The computer system 800 may be an optical device with a computer located therein, or a conventional computer system that can be used as a client computer system or a server computer system or as a web server computer system. The computer system 800 includes a computer 802, I/O devices 804, and a display device 806. The computer 802 includes a processor 808, a communications interface 810, memory 812, display controller 814, non-volatile storage 816, and I/O controller 818. The computer system 800 may be coupled to or include the I/O devices 804 and display device 806.

The computer 802 interfaces to external systems through the communications interface 810, which may include a modem or network interface. It will be appreciated that the communications interface 810 can be considered to be part of the computer system 800 or a part of the computer 802. The communications interface can be an analog modem, isdn modem, cable modem, token ring interface, satellite transmission interface (e.g. "direct PC"), or other interfaces for coupling a computer system to other computer systems.

Personal computers often have serial communication ports that support the RS-232 standard of communication. This is the most common interface used to transfer data from a digicam to the computer. Enhanced Parallel Port (EPP) is a newer hi-speed, bidirectional printer port on personal computers. Some digicams and scanners use the EPP port to transfer data. Also known as "iLink" and officially designated as the IEEE1394j protocol, Firewire is a high-speed data interface now being used on digital camcorders and soon, digital still cameras. The communications interface may be configured for use with any of these protocols or other protocols that are known or will be developed.

The processor 808 may be, for example, a conventional microprocessor such as an Intel Pentium microprocessor or Motorola power PC microprocessor. Digital cameras may have a different on-board multiprocessor. In a typical architecture, the memory 812 is coupled to the processor 808 by a bus 820. The memory 812 can be dynamic random access memory (DRAM) and can also include static ram (SRAM). The bus 820 couples the processor 808 to the memory 812. also to the non-volatile storage 816, to the display controller 814, and to the I/O controller 818.

The I/O devices 804 can include a keyboard, disk drives, printers, a scanner, and other input and output devices, including a mouse or other pointing device. An optical system will typically include a lens assembly and imaging optics, as well. The display controller 814 may control in the conventional manner a display on the display device 816, which can be, by way of example but not limitation, a cathode ray tube (CRT) or liquid crystal display (LCD). The display controller 814 and the I/O controller 818 can be implemented with conventional well known technology.

The non-volatile storage 816 is often a magnetic hard disk, an optical disk, or another form of storage for large amounts of data. Some of this data is often written, by a direct memory access process, into memory 812 during execution of software in the computer 802. One of skill in the art will immediately recognize that the terms "machine-readable medium" or "computer-readable medium" includes any type of storage device that is accessible by the processor 808 and also encompasses a carrier wave that encodes a data signal.

The computer system 800 is one example of many possible computer systems which have different architectures. For example, personal computers based on an Intel microprocessor often have multiple buses, one of which can be an I/O bus for the peripherals and one that directly connects the processor 848 and the memory 852 (often referred to as a memory bus). The buses are connected together through bridge components that perform any necessary translation due to differing bus protocols.

A Web TV system, which is known in the art, is also considered to be a computer system according to the present invention, but it may lack some of the features shown in FIG. 8, such as certain input or output devices. A typical computer system will usually include at least a processor, memory, and a bus coupling the memory to the processor.

In addition, the computer system 800 is controlled by operating system software that includes a file management system, such as a disk operating system, which is part of the operating system software. One example of operating system software with its associated file management system software is the family of operating systems known as Windows® from Microsoft Corporation of Redmond, Washington, and their associated file management systems. Another example of operating system software with its associated file management system software is the Linux operating system and its associated file management system. The file management system is typically stored in the non-volatile storage 816 and causes the processor 808 to execute the various acts required by the operating system to input and output data and to store data in memory, including storing files on the non-volatile storage 816. The operating systems on portable devices, such as digital cameras, generally take up much less space than the operating systems of personal computers, and have less functionality.

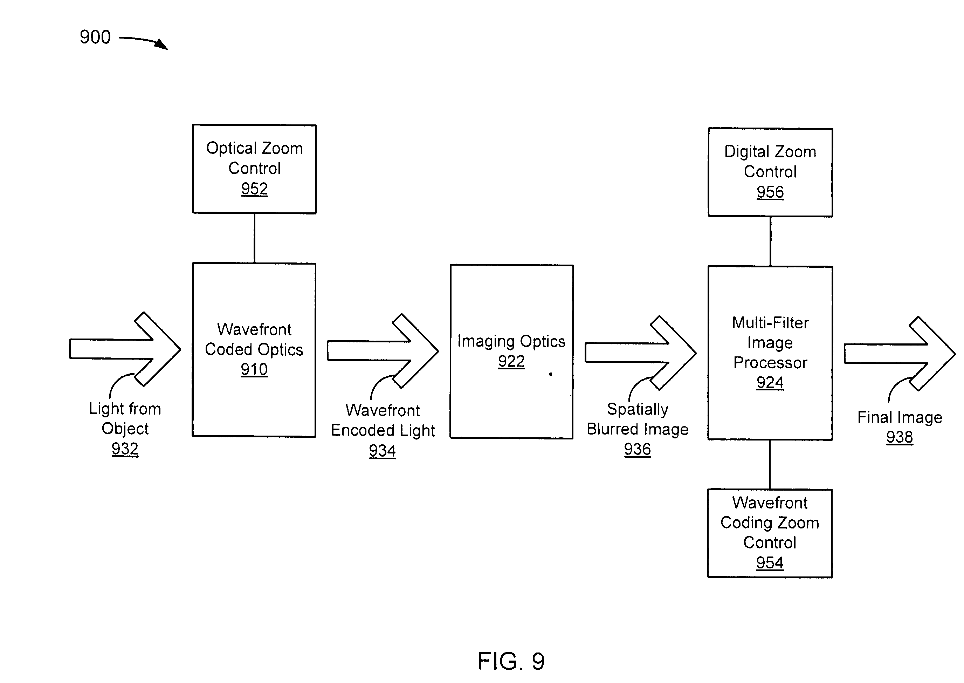

FIG. 9 depicts a system 900 with multi-zoom capability according to an embodiment. The system 900 includes wavefront coded optics 910, imaging optics 922, a multi-filter image processor 924. optical zoom control 952, wavefront coding zoom control 954, and digital zoom control 956. In the example of FIG. 9, the optical zoom control 952 is coupled to the wavefront coded optics 910, the wavefront coding zoom control 954 and the digital zoom control 956 to the multi-filter image processor 924.

In operation, light 932 from an object is incident on the wavefront coded optics 910. The optical zoom control 952 is effective to move one or more lenses (not shown) in the wavefront coded optics 910 to change focal distance. The wavefront coded optics 910 are effective to convert the light 932 to wavefront encoded light 934 at the selected focal distance. The imaging optics 922 are effective to convert the wavefront encoded light 934 into a spatially blurred image 936.

The multi-filter image processor 924 processes the spatially blurred image 936 into one or more processed images (not shown). The multi-filter image processor 924 makes use of one or more filters to render the processed images. A first filter may have a different effective focal distance than a second filter. If the first filter has a greater effective focal distance than the second filter, then the processed image associated with the first filter will have a relative zoom effect. This relative zoom effect is referred to as "wavefront coding zoom."

The final image 938 may be further modified using the digital zoom control 956. Digital zoom, as is known in the photographic arts, is effective to blow up the center of an image. Each of the zoom controls 952, 954, 956 may be set manually, according to a passive or active AF algorithm, or according to some other automatic or configurable procedure. Thus, the optical system 900 includes three distinct zoom control means.

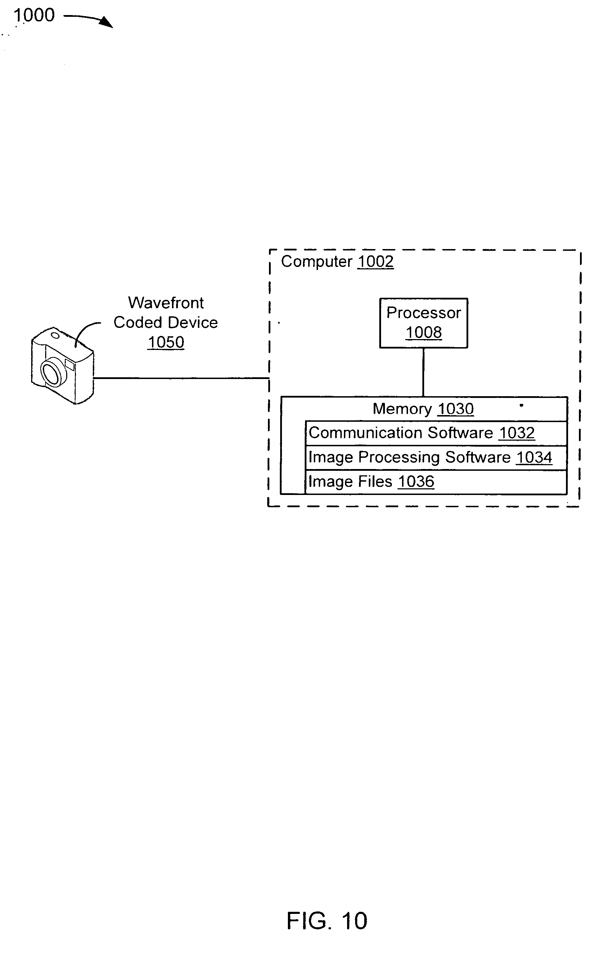

FIG. 10 depicts a wavefront coded image processing system 1000 according to an embodiment. The system 1000 includes a wavefront coded device 1050 and a computer 1002. In the example of FIG. 10, the wavefront coded device 1050 is a digital camera, but other devices, including by way of example but not limitation digital camcorders, analog cameras, microscopes, telescopes, or other optical devices could be used.

The computer 1002 may be similar to the computer described with reference to FIG. 8. In the example of FIG. 10, the computer 1002 includes a processor 1008 and memory 1030. The memory 1030 may include volatile, non-volatile, or other memory components.

In the example of FIG. 10, the memory includes communication software 1032, image processing software 1034, and image files 1036. The communication software 1032 includes drivers or any other necessary components for communicating with the wavefront coded device 1050. The communication software 1032 is optional because, in a non-limiting embodiment, no communication software 1032 is required to communicate with the wavefront coded device 1050. The image processing software 1034 is used to manipulate images stored in the image files 1036. The image files 1036 may be stored in any format, as would be apparent to one of skill in the art of image processing. The formats may or may not be different before and after image processing. By way of example but not limitation, the unprocessed files may be in a RAW format and the processed files may also be in a RAW format (or some other format).

In operation, in a non-limiting embodiment, the wavefront coded device 1050 includes images stored thereon. The images may be stored thereon because, for example, a user takes pictures or records video with the device, or the device is automated to take pictures record video. The images may be stored in practically any format, such as, by way of example but not limitation, compressed RAW images.

In operation, in a non-limiting embodiment, the computer 1002 downloads the images stored on the wavefront coded device. Alternatively, the wavefront coded device could provide a live feed to the computer 1002, rather than (or in addition to) storing the images. The computer 1002 may or may not execute the communication software 1032 using the processor 1008 in order to coordinate the downloading of the images (or the live feed, if applicable). Each of the images (or collections of images or video images) are stored as image files 1036.

In operation, in a non-limiting embodiment, the computer 1002 executes the image processing software 1034 using the processor 1008. The image processing software 1034 may be used to apply a filter to the images. Thus, if an image is distorted due to wavefront encoding, then the image processing software 1034 may remove the distortion.

Advantageously, an image may be stored in memory and processed in various ways if desired. For example, if a user takes a picture of an object, the image can be stored in memory. Then, the user may adjust the focal length, DOF, or other parameters after the fact using the image processing software 1034.

In an alternative, the computer 1002 is located on the wavefront encoded device 1050. In this alternative, a user may adjust various parameters to achieve a desired image while viewing, by way of example but not limitation, an LCD display of the image.

It should be noted that since the systems described above utilize a multi-filter image processor, the effects of multiple simultaneous focal lengths could be incorporated into an image. For example, an image could be rendered using a "near" filter so that objects that are relatively close are in focus and a "far" filter so that objects that are relatively far are in focus, but no "medium" filter (so objects that are neither "near" nor "far" might be blurry).

Another interesting effect may be to change focal distance as the image is traversed from center to edge so that the center object is in focus and objects not in the center, even if at the same distance as the object in the center, are blurred. Similarly, the focal length could be changed as the image is traversed from top to bottom or right to left, for example. A number of other variations may become apparent to artistic users of the systems described herein, or manufacturers of same.

The teachings described herein are applicable to digital movies, as well as still images. Although the embodiments primarily focus on digital images herein, the teachings are applicable to analog images, too.

As used herein, the term "wavefront coding" describes a technology that utilizes, by way of example but not limitation, aspheric optics plus signal processing. The term "wavefront coded" may be used to describe particular systems that include wavefront coding technology. The term "wavefront coded" may also be used to describe a component of a particular system configured for use in a wavefront coded system. By way of example but not limitation, a wavefront coded surface may be a component of wavefront coded optics, which may be a component of a wavefront coded system. As another non-limiting example, a wavefront coded digital camera can use wavefront coding to increase close focusing.

As used herein, the term "wavefront encoding" refers to the alteration of a signal, such as an electromagnetic wave, using a wavefront coding technique. By way of example but not limitation, wavefront coded optics may wavefront encode a signal; signal processing is used to remove the wavefront encoding.

As used herein, the term "embodiment" means an embodiment that serves to illustrate by way of example but not limitation.

It will be appreciated to those skilled in the art that the preceding examples and preferred embodiments are exemplary and not limiting to the scope of the present invention. It is intended that all permutations, enhancements, equivalents, and improvements thereto that are apparent to those skilled in the art upon a reading of the specification and a study of the drawings are included within the true spirit and scope of the present invention.

## Claims

1. A system comprising:
wavefront coded optics including a wavefront coded surface;
a multi-filter image processor coupled to the wavefront coded optics;
wherein, in operation, light from an object passes toward the wavefront coded optics and is incident on the wavefront coded surface, wavefront encoded light is directed from the wavefront coded optics toward the multi-filter image processor, the multi-filter uses a filter associated with one of a plurality of focus ranges and outputs a final image associated with the filter.

2. The system of claim 1, wherein:
the wavefront coded optics includes a lens with a wavefront coded surface;
the multi-filter image processor includes a digital signal processor (DSP).

3. The system of claim 1, further comprising imaging optics coupled between the wavefront coded optics and the multi-filter image processor, wherein, in operation, the wavefront encoded light from the wavefront coded optics is incident on the imaging optics, the imaging optics forms a spatially blurred image that the multi-filter image processor converts to the final image.

4. The system of claim 1, further comprising imaging optics coupled to the wavefront coded optics, wherein, in operation, the light from the object is incident on the imaging optics, the imaging optics form an image from the light which the wavefront coded optics uses to form a spatially blurred image that the DSP uses to produce the final image.

5. The system of claim 1, wherein the multi-filter image processor uses a wavefront coding-compatible algorithm to remove spatial effects of wavefront coding.

6. The system of claim 1, wherein the multi-filter image processor uses a wavefront coding-compatible algorithm to remove spatial effects of wavefront coding, and wherein the wavefront coding-compatible algorithm is capable of utilizing a plurality of filters that are associated with a respective plurality of characteristics selected from the group consisting of focus distances, depth of field (DOF), noise correction, color enhancements.

7. The system of claim 1, wherein the multi-filter image processor includes a plurality of filters associated with different focus distance and depth of field (DOF).

8. The system of claim 1, further comprising a digital zoom control coupled to the multi-filter image processor.

9. The system of claim 1, further comprising a wavefront coding zoom control, coupled to the multi-filter image processor, which is effective to facilitate selection of images associated with respective focal distance filters.

10. The system of claim 1, wherein the wavefront coded optics include a lens assembly, further comprising an optical zoom control, coupled to the wavefront coded optics, which is effective to move one or more lenses of the lens assembly to change focal distance.

11. A method comprising:
receiving a focus range selection;
wavefront encoding light reflected from or emitted by an object;
converting the wavefront encoded light into a spatially blurred image;
processing the spatially blurred image using a filter associated with the selected focus range.

12. The method of claim 11, further comprising receiving the focus range selection from an autofocus (AF) means.

13. The method of claim 11, wherein the focus range selection includes one or more parameters selected from the group consisting of depth of field (DOF), focal length, noise correction, color enhancement.

14. The method of claim 11, wherein said converting the wavefront encoded light into a spatially blurred image is accomplished by imaging optics.

15. The method of claim 11, wherein said wavefront encoding light is accomplished by wavefront coded optics, further comprising removing distortion introduced by the wavefront coded optics.

16. The method of claim 11, wherein the processing the spatially blurred image includes decoding the spatially blurred image into a plurality of processed images using a respective plurality of filter parameters and selecting one of the processed images as a final image.

17. A system comprising:
a decoder effective to convert a spatially distorted image into an undistorted image;
a plurality of filter parameters coupled to the decoder;
a passive autofocus (AF) engine, coupled to the decoder, effective to select a processed image as a final image;
wherein, in operation, the decoder receives a spatially distorted image and applies the plurality of filter parameters to the spatially distorted image to produce a respective plurality of processed images, and the passive AF engine selects a final image from the respective plurality of processed images.

18. The system of claim 17, wherein the decoder uses each of the plurality of filters in applying a decoding algorithm to the spatially distorted image to render the respective plurality of processed images.

19. The system of claim 17. wherein the plurality of filter parameters is fewer than the total number of filter parameters available to the decoder.

20. The system of claim 17, wherein the passive AF engine evaluates a portion of one or more of the respective plurality of processed images to determine which image has the greatest sharpness at the evaluated portion.
